(19) Europäisches Patentamt
European Patent Office
Office européen des brevets

(11) **EP 4 737 073 A1**

(12) **EUROPEAN PATENT APPLICATION**
published in accordance with Art. 153(4) EPC

(43) Date of publication:
**06.05.2026 Bulletin 2026/19**

(21) Application number: **24832044.2**

(22) Date of filing: **27.06.2024**

(51) International Patent Classification (IPC):
**B25J 13/08** (2006.01)

(52) Cooperative Patent Classification (CPC):
**B25J 13/08**

(86) International application number:
**PCT/JP2024/023349**

(87) International publication number:
**WO 2025/005185 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.06.2023 JP 2023108145**

(71) Applicant: **Kyocera Corporation
Kyoto-shi, Kyoto 612-8501 (JP)**

(72) Inventors:
• **ANAN, Naohiro
Kyoto-shi, Kyoto 612-8501 (JP)**
• **YAMAGISHI, Yuki
Kyoto-shi, Kyoto 612-8501 (JP)**
• **ONO, Kazuki
Kyoto-shi, Kyoto 612-8501 (JP)**

(74) Representative: **TBK
Bavariaring 4-6
80336 München (DE)**

(54) **PROCESSING DEVICE, ROBOT SYSTEM, END EFFECTOR, AND PROGRAM**

(57) A processing device includes a controller that detects, based on a force detection signal output from a sensor device, an external force acting on an end effector. The controller includes an obtainer. The obtainer obtains the external force acting on the end effector based on a plurality of first components of a gravitational force of the end effector acting on the end effector in a first orientation being an orientation of the end effector at reference setting for the sensor device, a plurality of second components of the gravitational force of the end effector acting on the end effector in a second orientation being an orientation of the end effector receiving the external force, and the force detection signal output in response to the external force acting on the end effector.

FIG. 3

EP 4 737 073 A1

**Description**

TECHNICAL FIELD

The present disclosure relates to a technique that uses a sensor device.

BACKGROUND OF INVENTION

Patent Literature 1 describes a technique for a robot.

CITATION LIST

PATENT LITERATURE

Patent Literature 1: Japanese Unexamined Patent Application Publication No. 7-205075

SUMMARY

One or more aspects of the present disclosure are directed to a processing device, a robotic system, an end effector, and a program. In one embodiment, a processing device includes a controller that detects, based on a force detection signal output from a sensor device, an external force acting on an end effector. The controller includes an obtainer. The obtainer obtains the external force acting on the end effector based on a plurality of first components of a gravitational force of the end effector acting on the end effector in a first orientation being an orientation of the end effector at reference setting for the sensor device, a plurality of second components of the gravitational force of the end effector acting on the end effector in a second orientation being an orientation of the end effector receiving the external force, and the force detection signal output in response to the external force acting on the end effector.

In one embodiment, a robotic system includes the above processing device and a robot. The robot includes the end effector controllable based on the external force obtained by the processing device.

In one embodiment, an end effector is an end effector controllable based on the external force obtained by the above processing device.

In one embodiment, a program is a program for causing a computer to function as the above processing device.

BRIEF DESCRIPTION OF THE DRAWINGS

FIG. 1 is a block diagram of a processing device in an example.
FIG. 2 is a schematic diagram of a robotic system in an example.
FIG. 3 is a block diagram of the processing device in an example.
FIG. 4 is a flowchart of an example operation performed by the processing device.
FIG. 5 is a flowchart of an example operation performed by a control system.
FIG. 6 is a graph showing an example operation performed by the processing device.
FIG. 7 is a block diagram of the processing device in an example.
FIG. 8 is a schematic diagram illustrating example holding orientations of an end effector (holder).

DESCRIPTION OF EMBODIMENTS

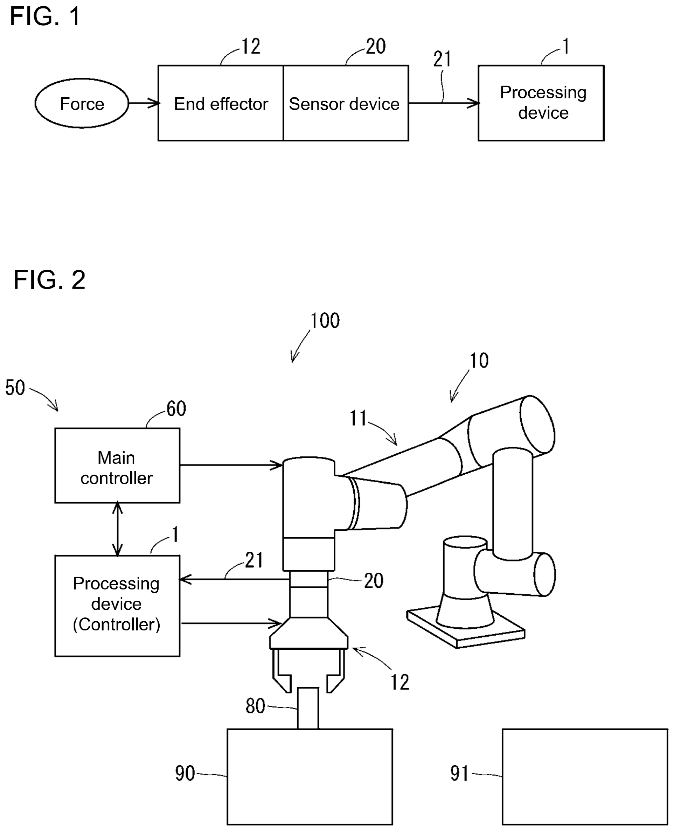

FIG. 1 is a block diagram of a processing device 1 in an example. The processing device 1 receives, for example, a force detection signal 21 output from a sensor device 20 that detects a force acting on an end effector 12 having a changeable orientation. The sensor device 20 is fixed to the end effector 12. The orientation of the force sensor 20 changes with the orientation of the end effector 12. The sensor device 20 can detect a force externally acting on the end effector 12. More specifically, the sensor device 20 can detect a gravitational force and an external force acting on the end effector 12. In other words, the sensor device 20 can detect the gravitational force acting on the end effector 12 and the external force acting on the end effector 12 other than the gravitational force. The sensor device 20 outputs the force detection signal 21 indicating a detection result. The processing device 1 can obtain (in other words, estimate or calculate) the external force acting on the end effector 12 other than the gravitational force by eliminating, from the force detection signal 21, an effect of the gravitational force acting on the end effector 12 included in the force detection signal 21.

A force acting on an object hereafter refers to a force including the gravitational force and an external force acting on the object. An external force acting on an object refers to an external force acting on the object other than the gravitational force. An external force acting on an object is, in other words, a force externally acting on the object other than the gravitational force.

The end effector 12 may be, for example, a holder that can hold an object (also referred to as a holding target object). In this case, the sensor device 20 can detect a force acting on the holder. The end effector 12 may be other than the holder. For example, the end effector 12 may be a machining component at a distal end of a machine tool. The end effector 12 may be, for example, a component for tightening screws, painting, welding, or cutting. The object may be, for example, an industrial product such as an electronic device or a screw, a food product such as a vegetable or bread, or a thing for everyday life such as a diaper, a toothbrush, or a cup.

In the example described below, the processing device 1 is used for the end effector 12 that is an end effector of a robot 10. FIG. 2 is a schematic diagram of a robotic system 100 including the processing device 1 and the robot 10 in an example.

As illustrated in FIG. 2, the robotic system 100 includes, for example, the robot 10 and a control system 50 that controls the robot 10. The control system 50 may be, for example, a control device or a controller.

Example Structure of Robot

The robot 10 is, for example, a robotic arm. The robot 10 includes, for example, an arm 11, a holder as the end effector 12, and the sensor device 20. The end effector 12 is a holder that holds an object 80. The end effector 12 is connected to the arm 11. The end effector 12 includes, for example, multiple fingers that can grip the object 80. The end effector 12 includes, for example, a motor that drives the multiple fingers. The multiple fingers are driven by the motor to grip the object 80. Note that the end effector 12 may hold the object 80 by suction.

The arm 11 includes, for example, at least one joint. The arm 11 includes, for example, a motor that rotates at least one joint. The arm 11 can change its orientation. The orientation of the end effector 12 changes with the orientation of the arm 11.

For example, the robot 10 holds and transfers the object 80. The robot 10 can transfer the object 80 by, for example, changing the orientation of the arm 11 while holding the object 80 using the end effector 12. The robot 10 holds, for example, the object 80 on a worktable 90 using the end effector 12. The robot 10 then moves the arm 11 to transfer the held object 80 from the worktable 90 to a worktable 91. The robot 10 then causes the end effector 12 to release the object 80 to place the object 80 on the worktable 91. This operation may be referred to as pick-and-place.

The operation performed by the robot 10 is not limited to the above example. For example, the robot 10 may hold and transfer multiple randomly placed objects 80 one by one. The robot 10 may hold the object 80 on the worktable 90, turn over the object 80, and then place the object 80 on the worktable 90 again.

The sensor device 20 can detect a force acting on the end effector 12 (also referred to as an acting force). The sensor device 20 repeatedly detects the acting force and repeatedly outputs the force detection signal 21 indicating the detection result of the acting force. The sensor device 20 is, for example, a force sensor 20. The acting force detected by the force sensor 20 includes a gravitational force acting on the end effector 12 (also referred to as an acting gravitational force) detected by the force sensor 20, and an external force acting on the end effector 12 (also referred to as an acting external force) detected by the force sensor 20. The force sensor 20 may be, for example, an electrical resistance sensor, a capacitance sensor, a piezoelectric sensor, or an optical sensor.

The force sensor 20 is, for example, located between the arm 11 and the end effector 12 and fixed to the end effector 12. The orientations of the force sensor 20 and the end effector 12 are fixed relative to each other. The force sensor 20 can detect the gravitational force acting on the end effector 12 when, for example, the end effector 12 is suspended in the air without being placed on a surface such as the ground. The orientation of the force sensor 20 changes with the orientation of the end effector 12. The orientation of the end effector 12 changes with the orientation of the arm 11, and thus the orientation of the force sensor 20 changes with the orientation of the arm 11.

For example, an orthogonal xyz coordinate system is defined for the force sensor 20. The orthogonal xyz coordinate system defined for the force sensor 20 is hereafter referred to as a sensor coordinate system. The directions of an x-axis, a y-axis, and a z-axis of the sensor coordinate system are respectively referred to as an x-direction, a y-direction, and a z-direction.

The orientation of the sensor coordinate system changes with the orientation of the force sensor 20. The orientation of the force sensor 20 changes with the orientation of the end effector 12, and thus the orientation of the sensor coordinate system changes with the orientation of the end effector 12. The orientation of the force sensor 20 changes with the orientation of the arm 11, and thus the orientation of the sensor coordinate system changes with the orientation of the arm 11.

The force sensor 20 can detect, for example, an x-direction component of the acting force (also referred to as an acting force x-component), a y-direction component of the acting force (also referred to as an acting force y-component), and a z-direction component of the acting force (also referred to as an acting force z-component). The acting force x-component detected by the force sensor 20 is hereafter referred to as a detected acting force x-component. The acting force y-component detected by the force sensor 20 is referred to as a detected acting force y-component. The acting force z-component detected by the force sensor 20 is referred to as a detected acting force z-component. The force detection signal 21 output from the force sensor 20 indicates the detected acting force x-component, the detected acting force y-component, and the detected acting force z-component.

The force sensor 20 can detect, for example, an x-direction component of the acting gravitational force (also referred to as an acting gravitational force x-component), a y-direction component of the acting gravitational force (also referred to as an acting gravitational force y-component), and a z-direction component of the acting gravitational force (also referred to as an acting gravitational force z-component). The acting gravitational force x-component detected by the force sensor 20 is hereafter referred to as a detected acting gravitational force x-component. The acting gravitational force y-component detected by the force sensor 20 is referred to as a detected acting gravitational force y-component. The acting gravitational force z-component detected by the force sensor 20 is referred to as a detected acting gravitational force z-component.

The force sensor 20 can detect, for example, an x-direction component of the acting external force (also referred to as an acting external force x-component), a y-direction component of the acting external force (also referred to as an acting external force y-component), and a z-direction component of the acting external force (also referred to as an acting external force z-component). The acting external force x-component detected by the force sensor 20 is hereafter referred to as a detected acting external force x-component. The acting external force y-component detected by the force sensor 20 is referred to as a detected acting external force y-component. The acting external force z-component detected by the force sensor 20 is referred to as a detected acting external force z-component.

The detected acting force x-component includes the detected acting gravitational force x-component and the detected acting external force x-component. When the force sensor 20 does not detect the x-direction component of the acting gravitational force, the detected acting gravitational force is zero. When the force sensor 20 does not detect the x-direction component of the acting external force, the detected acting external force is zero. The detected acting force y-component includes the detected acting gravitational force y-component and the detected acting external force y-component. The detected acting force z-component includes the detected acting gravitational force z-component and the detected acting external force z-component.

In this example, reference setting is performed to adjust a reference point for the force detection signal 21. For example, the reference setting is performed by the force sensor 20 in response to an instruction from the processing device 1. The reference setting is also referred to as reference point setting for setting a reference point for the force detection signal 21. The reference setting is also referred to as, for example, offsetting. In the reference setting, for example, a reference point is adjusted (in other words, set) for each of the detected acting force x-component, the detected acting force y-component, and the detected acting force z-component. The force detection signal 21 after the reference setting indicates the detected acting force x-component after the reference setting, the detected acting force y-component after the reference setting, and the detected acting force z-component after the reference setting. The reference point is also referred to as, for example, a zero point. The reference setting is also referred to as, for example, zero point setting or zero point adjustment.

In the reference setting, each of the detected acting force x-component, the detected acting force y-component, and the detected acting force z-component at the time of the reference setting is set to the reference point. The detected acting force x-component, the detected acting force y-component, and the detected acting force z-component that are set as the reference points, or specifically, the detected acting force x-component, the detected acting force y-component, and the detected acting force z-component at the time of the reference setting, are respectively referred to as an x-component adjustment value, a y-component adjustment value, and a z-component adjustment value.

A value obtained by subtracting the x-component adjustment value from the detected acting force x-component is the detected acting force x-component after the reference setting. A value obtained by subtracting the y-component adjustment value from the detected acting force y-component is the detected acting force y-component after the reference setting. A value obtained by subtracting the z-component adjustment value from the detected acting force z-component is the detected acting force z-component after the reference setting. The detected acting force x-component without a modifier "after the reference setting" refers to an original detected acting force x-component without undergoing the reference setting, rather than the detected acting force x-component after the reference setting. This also applies to the detected acting force y-component and the detected acting force z-component.

The detected acting force x-component after the reference setting indicates the amount of change in the detected acting force x-component (or the original detected acting force x-component without undergoing the reference setting) from the time of the reference setting. The detected acting force x-component after the reference setting includes the amount of change in the detected acting gravitational force x-component from the time of the reference setting.

The detected acting force y-component after the reference setting indicates the amount of change in the detected acting force y-component from the time of the reference setting. The detected acting force y-component after the reference setting includes the amount of change in the detected acting gravitational force y-component from the time of the reference setting.

The detected acting force z-component after the reference setting indicates the amount of change in the detected acting force z-component from the time of the reference setting. The detected acting force z-component after the reference setting includes the amount of change in the detected acting gravitational force z-component from the time of the reference setting.

When reference setting is newly performed after the reference setting, the detected acting force x-component, the detected acting force y-component, and the detected acting force z-component at the new reference setting are set to new reference points. More specifically, the detected acting force x-component, the detected acting force y-component, and the detected acting force z-component at the new reference setting are respectively used as the x-component adjustment value, the y-component adjustment value, and the z-component adjustment value, which are respectively subtracted from the detected acting force x-component, the acting force y-component, and the acting force z-component.

The reference setting for the force detection signal 21 eliminates offsets included in the detected acting force x-component, the detected acting force y-component, and the detected acting force z-component. The reference setting is repeatedly performed to reduce temperature drift in the detected acting force x-component, the detected acting force y-component, and the detected acting force z-component.

Example Structure of Control System

The control system 50 that controls the robot 10 includes, for example, a main controller 60 and the processing device 1. The processing device 1 functions as, for example, a controller 1 that controls the end effector 12.

The main controller 60 is, for example, a control device that manages an overall operation of the robot 10. The main controller 60 may be referred to as, for example, a robot controller. The main controller 60 can control the arm 11. The main controller 60 can also control the end effector 12 through the processing device 1. The main controller 60 may also be a processing device.

The processing device 1 can control the holding of the object 80 performed by the end effector 12. The processing device 1 can cause the end effector 12 to hold or release the object 80. The processing device 1 can also control a holding force of the end effector 12 holding the object 80. In this example, the end effector 12 grips the object 80, and the processing device 1 can control a grip force of the end effector 12 gripping the object 80. The processing device 1 can adjust the holding force of the end effector 12 holding the object 80 by adjusting the distance between the multiple fingers of the end effector 12 holding the object 80.

Example Structure of Processing Device

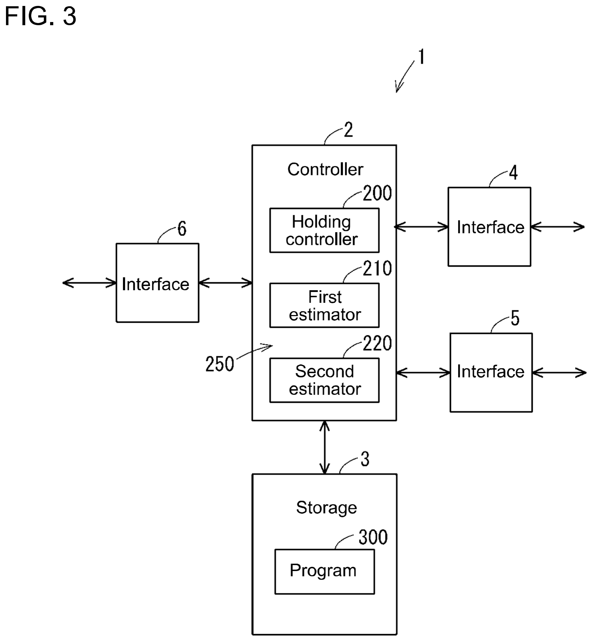

FIG. 3 is a block diagram of the processing device 1 in an example. The processing device 1 is, for example, a computer. As illustrated in FIG. 3, the processing device 1 includes, for example, a controller 2, a storage 3, an interface 4, an interface 5, and an interface 6. The processing device 1 may be, for example, a processing circuit.

The interface 6 can communicate with the main controller 60. The interface 6 may communicate with the main controller 60 with wires or wirelessly. The interface 6 may be, for example, an interface circuit, a communicator, or a communication circuit. For example, an instruction or a notification provided from the main controller 60 to the processing device 1 is input into the controller 2 through the interface 6. The controller 2 can provide, for example, a notification to the main controller 60 through the interface 6.

The interface 4 can communicate with the force sensor 20. The interface 4 may communicate with the force sensor 20 with wires or wirelessly. The interface 4 may be, for example, an interface circuit, a communicator, or a communication circuit. The force detection signal 21 from the force sensor 20 is received by the interface 4 and input into the controller 2.

The interface 5 can drive the end effector 12 in response to an instruction from the controller 2. The interface 5 may be, for example, an interface circuit or a drive circuit. The interface 5 can drive, for example, the motor included in the end effector 12.

The controller 2 can control other components of the processing device 1 to centrally manage the operation of the processing device 1. The controller 2 may be, for example, a control circuit. The controller 2 includes at least one processor to provide control and processing capabilities for implementing various functions, as described in more detail below.

In various embodiments, at least one processor may be a single integrated circuit (IC), or multiple ICs, multiple discrete circuits, or both these circuits connected to one another for mutual communication. The processor may be implemented using various known techniques.

In one embodiment, for example, the processor includes one or more circuits or units configured to implement instructions stored in an associated memory to perform one or more data computation procedures or processes. In another embodiment, the processor may be firmware (e.g., a discrete logic component) configured to perform one or more data computation procedures or processes.

In various embodiments, the processor includes one or more processors, controllers, microprocessors, microcontrollers, application-specific integrated circuits (ASICs), digital signal processors (DSPs), programmable logic devices, field programmable gate arrays, combinations of any of these devices or configurations, or combinations of other known devices or configurations. The processor may implement the functions described below.

The controller 2 may include, for example, a central processing unit (CPU) as the processor. The storage 3 may include a non-transitory recording medium readable by the CPU in the controller 2, such as a read-only memory (ROM) and a random-access memory (RAM). The storage 3 stores, for example, a program 300 for controlling the processing device 1. Various functions of the controller 2 are implemented by, for example, the CPU in the controller 2 executing the program 300 in the storage 3.

The structure of the controller 2 is not limited to the above example. For example, the controller 2 may include multiple CPUs. The controller 2 may also include at least one DSP. The functions of the controller 2 may be implemented entirely or partially by a hardware circuit, without using software to implement the functions. The storage 3 may include a non-transitory computer-readable recording medium other than the ROM and the RAM. The storage 3 may include, for example, a small hard disk drive and a solid-state drive (SSD).

Note that the main controller 60 may have the same structure as or a similar structure to the processing device 1. For example, the main controller 60 may include a controller that is the same as or similar to the controller 2, a storage that is the same as or similar to the storage 3, an interface that communicates with the processing device 1, and an interface that drives the arm 11.

Example Estimation Process of Acting External Force

The controller 2 performs an external force estimation process for estimating the acting external force based on the force detection signal 21. The external force estimation process is, in other words, a process of detecting the external force acting on the end effector 12 based on the force detection signal 21. The controller 2 can detect the acting external force based on the force detection signal 21. The controller 2 controls the holding force of the end effector 12 holding the object 80 based on the acting external force estimated in the external force estimation process.

The CPU in the controller 2 executes the program 300 in the storage 3 to implement, as functional blocks, for example, a holding controller 200 and an obtainer 250 in the controller 2. The holding controller 200 controls, through the interface 5, the holding of the object 80 performed by the end effector 12. The obtainer 250 estimates (in other words, detects) the acting external force based on the force detection signal 21 received by the interface 4.

The obtainer 250 includes, for example, a first estimator 210 and a second estimator 220. The first estimator 210 estimates (in other words, calculates), for example, the detection result of the acting gravitational force detected by the force sensor 20 at the reference setting. The second estimator 220 estimates (in other words, calculates) the acting external force based on, for example, the force detection signal 21 after the reference setting and the estimation result obtained by the first estimator 210.

Note that the functions of the holding controller 200 may be implemented entirely or partially by a hardware circuit, without using software to implement the functions. This also applies to the obtainer 250, the first estimator 210, and the second estimator 220.

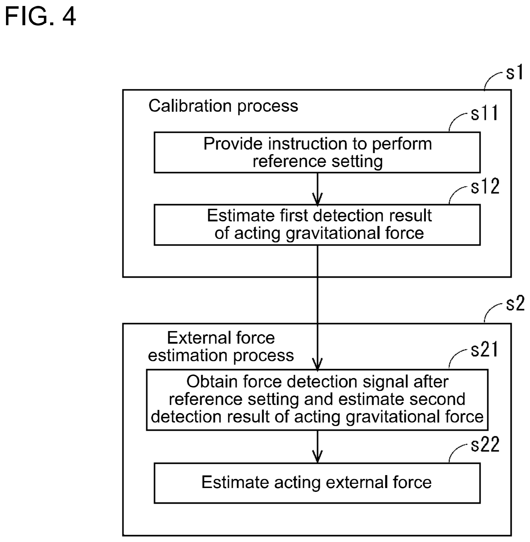

FIG. 4 is a flowchart of an example operation performed by the controller 2. As shown in FIG. 4, a calibration process is performed in step s1, followed by the external force estimation process in step s2. The calibration process is, in other words, a preparation process for estimating the acting external force.

In the calibration process, in step s11, the controller 2 provides an instruction through the interface 4 to the force sensor 20 to perform the reference setting. The controller 2 provides the instruction to the force sensor 20 to perform the reference setting with no external force acting on the end effector 12. The reference setting is thus performed with no external force acting on the end effector 12. In response to the instruction from the controller 2, the force sensor 20 performs the reference setting. When completing the reference setting, the force sensor 20 outputs the force detection signal 21 after the reference setting. The orientation of the end effector 12 at the reference setting, or in other words, the orientation of the end effector 12 at the time when the controller 2 provides the instruction to the force sensor 20 to perform the reference setting, is hereafter referred to as a reference setting orientation or a first orientation. The reference setting orientation is not limited to a specific orientation and may be any orientation.

In step s12 after step s11, the first estimator 210 estimates a first detection result of components of the acting gravitational force detected by the force sensor 20 at the reference setting. In other words, the first estimator 210 estimates the first detection result of the acting gravitational force detected by the force sensor 20 for the end effector 12 in the reference setting orientation with no external force acting on the end effector 12. The first detection result includes the detected acting gravitational force x-component, the detected acting gravitational force y-component, and the detected acting gravitational force z-component. The first estimator 210 estimates the first detection result by calculating first predictive values of the detected acting gravitational force x-component, the detected acting gravitational force y-component, and the detected acting gravitational force z-component at the reference setting.

The first estimator 210 estimates the first detection result based on the reference setting orientation of the end effector 12 and the weight and gravitational acceleration of the end effector 12. More specifically, the first estimator 210 calculates the first predictive values of the detected acting gravitational force x-component, the detected acting gravitational force y-component, and the detected acting gravitational force z-component based on the reference setting orientation and the weight and gravitational acceleration of the end effector 12.

The x-direction, the y-direction, and the z-direction of the sensor coordinate system at the reference setting are respectively referred to as a reference setting x-direction, a reference setting y-direction, and a reference setting z-direction. The first estimator 210 calculates the component of the reference setting x-direction of the gravitational force acting on the end effector 12 based on the weight and gravitational acceleration of the end effector 12, and uses the calculated value as a predictive value of the detected acting gravitational force x-component. The first estimator 210 calculates the component of the reference setting y-direction of the gravitational force acting on the end effector 12 based on the weight and gravitational acceleration of the end effector 12, and uses the calculated value as a predictive value of the detected acting gravitational force y-component. The first estimator 210 calculates the component of the reference setting z-direction of the gravitational force acting on the end effector 12 based on the weight and gravitational acceleration of the end effector 12, and uses the calculated value as a predictive value of the detected acting gravitational force z-component.

The first predictive values of the detected acting gravitational force x-component, the detected acting gravitational force y-component, and the detected acting gravitational force z-component calculated by the first estimator 210 are, in other words, multiple first components of the gravitational force of the end effector 12 acting on the end effector 12 in the reference setting orientation (in other words, the first orientation).

Information about the weight and gravitational acceleration of the end effector 12 is prestored in the storage 3. The first estimator 210 can identify the reference setting orientation of the end effector 12. For example, the end effector 12 may include an acceleration sensor that detects the orientation of the end effector 12. In this case, for example, the first estimator 210 obtains a detection result from the acceleration sensor in step s12, and identifies the current orientation of the end effector 12 based on the obtained detection result. The first estimator 210 then uses the identified orientation as the reference setting orientation.

The first estimator 210 may also receive information about the current orientation of the end effector 12 from the main controller 60 that controls the orientation of the arm 11. In this case, for example, the main controller 60 repeatedly identifies the current orientation of the end effector 12 and repeatedly provides information about the identified current orientation to the processing device 1. The main controller 60 that controls the arm 11 can identify the current orientation of the end effector 12 based on, for example, the current orientation of the arm 11. The first estimator 210 uses, as the reference setting orientation, the current orientation of the end effector 12 indicated by the information provided from the main controller 60 to the processing device 1 in step s12.

When the calibration process ends upon completion of step s12, the external force estimation process is performed. The external force estimation process may be performed immediately after the calibration process or some time after the calibration process. The external force estimation process may be performed multiple times after the calibration process.

In the external force estimation process, in step s21, the second estimator 220 first obtains the force detection signal 21 after the reference setting output from the force sensor 20. In step s21, the second estimator 220 estimates a second detection result of the acting gravitational force currently detected by the force sensor 20. The orientation of the end effector 12 at the time when the external force estimation process is performed is referred to as an external force estimation orientation or a second orientation. The external force estimation orientation is the orientation of the end effector 12 after the reference setting.

In other words, in step s21, the second estimator 220 estimates the second detection result of the acting gravitational force detected by the force sensor 20 for the end effector 12 in the external force estimation orientation. In still other words, the second estimator 220 estimates the second detection result of the acting gravitational force detected by the force sensor 20 when the external force estimation process is performed (or at the time of the external force estimation). In still other words, the second estimator 220 estimates the second detection result of the acting gravitational force detected by the force sensor 20 when the acting external force is estimated.

The external force estimation orientation is not limited to a specific orientation and may be any orientation. The external force estimation orientation may be the same as or different from the reference setting orientation.

The second detection result includes the detected acting gravitational force x-component, the detected acting gravitational force y-component, and the detected acting gravitational force z-component. The second estimator 220 estimates the second detection result currently obtained by the force sensor 20 by calculating second predictive values of the detected acting gravitational force x-component, the detected acting gravitational force y-component, and the detected acting gravitational force z-component currently obtained by the force sensor 20. In other words, the second estimator 220 estimates the second detection result at the time of the external force estimation by calculating the second predictive values of the detected acting gravitational force x-component, the detected acting gravitational force y-component, and the detected acting gravitational force z-component at the time of the external force estimation.

The second estimator 220 estimates the second detection result at the time of the external force estimation based on the external force estimation orientation of the end effector 12 and the weight and gravitational acceleration of the end effector 12. More specifically, the second estimator 220 calculates the second predictive values of the detected acting gravitational force x-component, the detected acting gravitational force y-component, and the detected acting gravitational force z-component at the time of the external force estimation based on the external force estimation orientation of the end effector 12 and the weight and gravitational acceleration of the end effector 12. In step s21, the second estimator 220 may identify the current orientation of the end effector 12 based on the detection result obtained by the acceleration sensor included in the end effector 12, and use the identified orientation as the external force estimation orientation. In step s21, the second estimator 220 may use, as the external force estimation orientation, the current orientation of the end effector 12 indicated by the information provided from the main controller 60. The second predictive values of the detected acting gravitational force x-component, the detected acting gravitational force y-component, and the detected acting gravitational force z-component are calculated in the same manner as or in a similar manner to the first predictive values of the detected acting gravitational force x-component, the detected acting gravitational force y-component, and the detected acting gravitational force z-component in step s12.

The second predictive values of the detected acting gravitational force x-component, the detected acting gravitational force y-component, and the detected acting gravitational force z-component calculated by the second estimator 220 are, in other words, multiple second components of the gravitational force of the end effector 12 acting on the end effector 12 in the external force estimation orientation (in other words, the second orientation).

In step s22 after step s21, the second estimator 220 estimates the acting external force currently acting on the end effector 12. In other words, the second estimator 220 estimates the acting external force acting on the end effector 12 in the external force estimation orientation. In still other words, the second estimator 220 estimates the acting external force acting on the end effector 12 at the time of the external force estimation. The second estimator 220 estimates the acting external force currently acting on the end effector 12 based on the force detection signal 21 obtained in step s21, the estimated second detection result, and the first detection result estimated by the first estimator 210 in step s12. For example, the second estimator 220 predicts the acting external force by calculating predictive values of the x-direction component, the y-direction component, and the z-direction component of the acting external force currently acting on the end effector 12. In other words, the second estimator 220 estimates the acting external force acting on the end effector 12 in the external force estimation orientation based on the force detection signal 21 output for the end effector 12 in the external force estimation orientation, the estimated second detection result, and the first detection result estimated in step s12.

The first detection result estimated by the first estimator 210, or specifically, the first predictive values of the detected acting gravitational force x-component, the detected acting gravitational force y-component, and the detected acting gravitational force z-component (in other words, the multiple first components) are respectively denoted by Fg1x, Fg1y, and Fg1z. The second detection result estimated by the second estimator 220, or specifically, the second predictive values of the detected acting gravitational force x-component, the detected acting gravitational force y-component, and the detected acting gravitational force z-component (in other words, the multiple second components) are respectively denoted by Fg2x, Fg2y, and Fg2z. The detected acting force x-component after the reference setting, the detected acting force y-component after the reference setting, and the detected acting force z-component after the reference setting indicated by the force detection signal 21 obtained in step s21 are respectively denoted by Fmx, Fmy, and Fmz. The predictive values of the x-direction component, the y-direction component, and the z-direction component of the acting external force currently acting on the end effector 12 are respectively denoted by Fox, Foy, and Foz.

The second estimator 220 calculates the values Fox, Foy, and Foz using Formula 1 below.

$$\begin{pmatrix} Fox \\ Foy \\ Foz \end{pmatrix} = \begin{pmatrix} Fg1x \\ Fg1y \\ Fg1z \end{pmatrix} + \begin{pmatrix} Fmx \\ Fmy \\ Fmz \end{pmatrix} - \begin{pmatrix} Fg2x \\ Fg2y \\ Fg2z \end{pmatrix} \qquad (1)$$

The value Fmx includes the amount of change from the time of the reference setting for the current detected acting gravitational force x-component. A value obtained by adding the value Fmx to the first predictive value Fg1x of the detected acting gravitational force x-component at the reference setting thus includes a value corresponding to the current detected acting gravitational force x-component and the x-direction component of the current acting external force. A value obtained by subtracting the second predictive value Fg2x of the current detected acting gravitational force x-component from the value obtained by adding the value Fmx to the value Fg1x corresponds to the x-direction component of the current acting external force (in other words, the acting external force acting on the end effector 12 at the time of the external force estimation). In other words, (Fg1x + Fmx - Fg2x) is the predictive value Fox of the x-direction component of the current acting external force.

In the same or a similar manner, a value obtained by subtracting the second predictive value Fg2y of the current detected acting gravitational force y-component from a value obtained by adding the value Fmy to the value Fg1y corresponds to the y-direction component of the current acting external force. In other words, (Fg1y + Fmy - Fg2y) is the predictive value Foy of the y-direction component of the current acting external force.

In the same or a similar manner, a value obtained by subtracting the second predictive value Fg2z of the current detected acting gravitational force z-component from a value obtained by adding the value Fmz to the value Fg1z corresponds to the z-direction component of the current acting external force. In other words, (Fg1z + Fmz - Fg2z) is the predictive value Foz of the z-direction component of the current acting external force.

In this manner, the effect of the acting gravitational force can be eliminated from the force detection signal 21 after the reference setting by adding the predictive value of the first detection result of the acting gravitational force at the reference setting to the force detection signal 21 after the reference setting and subtracting, from the resultant value, the predictive value of the second detection result of the acting gravitational force after the reference setting. The acting external force can thus be estimated. In other words, the acting external force can be obtained. Note that each of the x-direction component, the y-direction component, and the z-direction component of the acting external force may be obtained as the acting external force, or the magnitude of the acting external force (a value combining the x-direction component, the y-direction component, and the z-direction component) may be obtained as the acting external force (described later).

The storage 3 may store weights of multiple types of end effectors 12 that are usable. In this case, the first estimator 210 may read, from the storage 3, the weight of an end effector 12 that is currently controlled, and may use the weight in step s12. In this case, for example, the storage 3 stores effector type information indicating the type of the end effector 12 currently included in the robot 10. The first estimator 210 can identify the type of the end effector 12 currently included in the robot 10 based on the effector type information in the storage 3. Information about the type of the end effector 12 currently included in the robot 10 may be provided to the processing device 1 from the main controller 60.

The storage 3 may store orientation identification information for identifying the reference setting orientation. In this case, the first estimator 210 may perform step s12 at a time different from the time of the reference setting using the orientation identification information in the storage 3, unlike in the example in FIG. 4. For example, the first estimator 210 may perform step s12 some time after the reference setting.

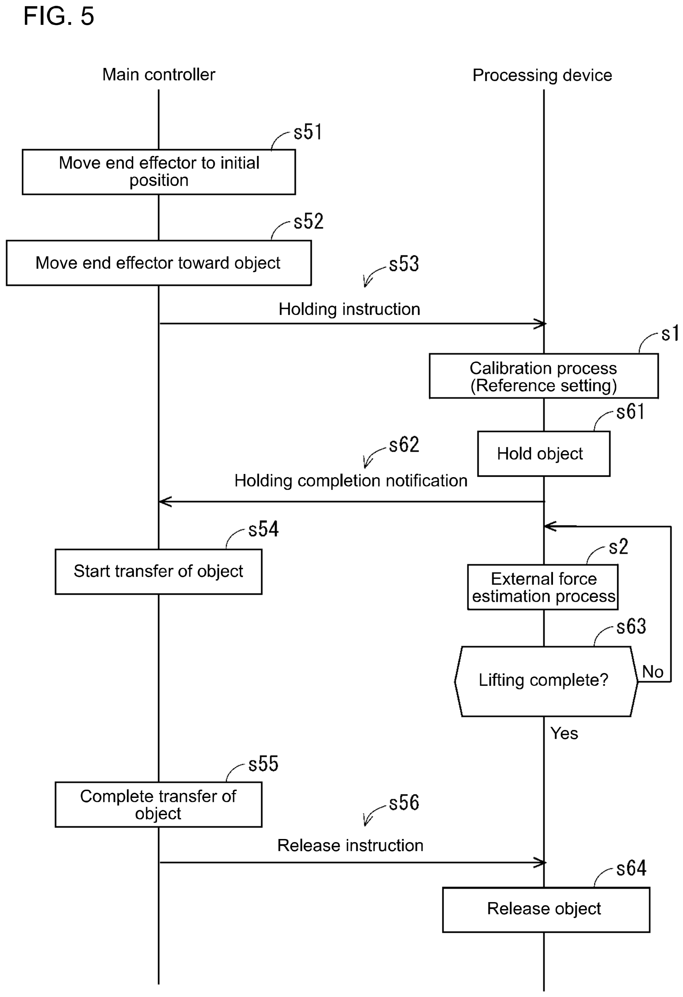

The calibration process and the external force estimation process shown in FIG. 4 can be performed in various situations. FIG. 5 is a flowchart of an example operation performed by the control system 50 for the calibration process and the external force estimation process when the robot 10 performs pick-and-place of the object 80 on the worktable 90.

As shown in FIG. 5, in step s51, the main controller 60 in the control system 50 controls the motion of the arm 11 to move the end effector 12 to its initial position. The initial position is set to, for example, a position above the object 80 on the worktable 90.

In step s52, the main controller 60 controls the motion of the arm 11 to move the end effector 12 toward the object 80 on the worktable 90. More specifically, the main controller 60 controls the motion of the arm 11 to move the end effector 12 toward the object 80 to have the object 80 located between the multiple fingers of the end effector 12. In step s53, the main controller 60 provides an instruction to the processing device 1 to cause the end effector 12 to hold the object 80 (also referred to as a holding instruction).

In the processing device 1 receiving the holding instruction, the calibration process in step s1 described above is performed. The reference setting and the estimation of the first detection result of the acting gravitational force at the reference setting are thus performed before the holding controller 200 causes the end effector 12 to hold the object 80.

In step s61 after step s1, the holding controller 200 controls the end effector 12 to hold the object 80 with a predetermined holding force. When the end effector 12 holds the object 80, the processing device 1 provides, in step s62, a holding completion notification to the main controller 60 to indicate that the end effector 12 has completed the holding of the object 80.

In response to the holding completion notification, the main controller 60 causes, in step s54, the robot 10 to start transfer of the object 80 held by the end effector 12 to the worktable 91. The main controller 60 can control the motion of the arm 11 to cause the robot 10 to transfer the object 80 to the worktable 91. To transfer the object 80 from the worktable 90 to the worktable 91, the robot 10 first lifts the object 80 from the worktable 90. The robot 10 then transfers the lifted object 80 to the worktable 91.

After step s62, the processing device 1 performs the external force estimation process in step s2 described above. In the external force estimation process, the acting external force currently acting on the end effector 12 is estimated. The processing device 1 repeatedly performs the external force estimation process until the object 80 lifted by the robot 10 is separated from the worktable 90. Thus, the second estimator 220 estimates the acting external force acting on the end effector 12 multiple times during a period from when the object 80 is held by the end effector 12 to when the object 80 is lifted. In other words, the second estimator 220 estimates the acting external force acting on the end effector 12 at each of multiple times during the period from when the object 80 is held by the end effector 12 to when the object 80 is lifted. In each of multiple cycles of the external force estimation process performed during the period from when the object 80 is held by the end effector 12 to when the object 80 is lifted, the second estimator 220 uses the first detection result estimated in the calibration process performed immediately after step s53.

Each time the second estimator 220 performs the external force estimation process, the second estimator 220 determines whether the robot 10 has completed the lifting of the object 80 in step s63. When determining that the robot 10 has completed the lifting of the object 80 (Yes in step s63), or in other words, when determining that the object 80 has been separated from the worktable 90, the second estimator 220 stops repeating the external force estimation process.

The holding controller 200 may control the holding force of the end effector 12 holding the object 80 based on the acting external force estimated by the second estimator 220 during the period from when the object 80 is held by the end effector 12 to when the object 80 is lifted. More specifically, the holding controller 200 may control the holding force of the end effector 12 holding the object 80 based on the acting external force estimated repeatedly by the second estimator 220 until the determination result in step s63 is affirmative after step s61. The holding force hereafter refers to the holding force of the end effector 12 holding the object 80.

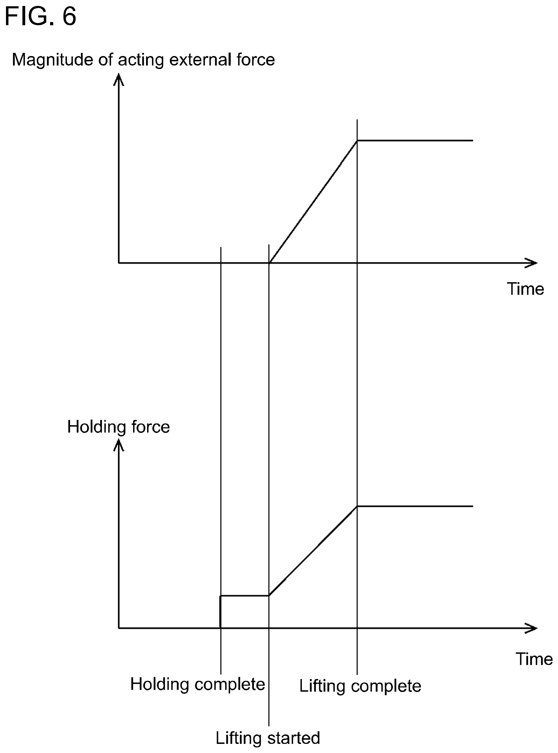

FIG. 6 is a graph showing example control of the holding force performed by the holding controller 200. An upper graph in FIG. 6 shows changes in the magnitude of the acting external force acting on the end effector 12 during the period from when the object 80 is held by the end effector 12 to when the object 80 is lifted in an example. A lower graph in FIG. 6 shows the holding force controlled during the period from when the object 80 is held by the end effector 12 to when the object 80 is lifted in an example. In this example, the end effector 12 receives an external force due to the weight of the object 80 held by the end effector 12 and the gravitational force alone during the period from when the object 80 is held by the end effector 12 to when the object 80 is lifted.

In this example, the upper graph in FIG. 6 shows that the magnitude of the acting external force (or the force externally acting on the end effector 12 other than the gravitational force) is zero before the end effector 12 starts holding and lifting the object 80, with no external force other than the gravitational force acting on the end effector 12. In this example, the magnitude of the acting external force gradually increases after the robot 10 starts lifting the object 80 to separate the object 80 from the worktable 90, or in other words, after the robot 10 starts a lifting operation of the object 80. The magnitude of the acting external force is then constant after the lifting of the object 80 is complete, or specifically, after the object 80 is separated from the worktable 90.

Each time the second estimator 220 performs the external force estimation process, the second estimator 220 calculates the magnitude of the acting external force estimated in the external force estimation process. In this example, the magnitude of the acting external force estimated in the external force estimation process is the magnitude of the resultant vector of predictive values of the x-direction component, the y-direction component, and the z-direction component of the acting external force calculated in the external force estimation process. Once the magnitude of the estimated acting external force has become constant after a gradual increase in the repeatedly performed external force estimation process, the second estimator 220 determines that the lifting of the object 80 is complete (Yes in step s63), and stops repeating the external force estimation process.

As shown in the lower graph in FIG. 6, for example, the holding controller 200 may gradually increase the holding force with the gradual increase in the magnitude of the acting external force estimated by the second estimator 220 during the period from when the object 80 is held by the end effector 12 to when the object 80 is lifted. The object 80 is thus less likely to fall from the end effector 12 when the robot 10 lifts the object 80 held by the end effector 12.

Note that the end effector 12 may be in any orientation, without being limited to a specific orientation, when the end effector 12 holds the object 80. The end effector 12 may also be in any orientation, without being limited to a specific orientation, when the robot 10 lifts the object 80 held by the end effector 12.

After the main controller 60 causes the robot 10 to start transfer of the object 80 in step s54 and to complete the transfer of the object 80 to the worktable 91 in step s55, the main controller 60 performs step s56. In step s56, the main controller 60 provides an instruction to the processing device 1 to cause the end effector 12 to release the object 80 (also referred to as a release instruction).

In the processing device 1 receiving the release instruction, the holding controller 200 causes the end effector 12 to release the object 80 in step s64. This completes the pick-and-place.

When a new object 80 is placed on the worktable 90, the control system 50 performs a series of processes shown in FIG. 5 to cause the robot 10 to perform pick-and-place of the new object 80. The robotic system 100 operates in the same or a similar manner each time a new object 80 is placed on the worktable 90.

The control system 50 can operate as in the example in FIG. 5 when the robot 10 holds and transfers multiple randomly placed objects 80 one by one from the worktable 90 to the worktable 91. In this case, for example, the robotic system 100 includes a camera that captures an image of the multiple randomly placed objects 80. In step s52, the main controller 60 determines an object 80 as an operation target among the multiple randomly placed objects 80 based on a camera image obtained by the camera. The main controller 60 then determines, based on the camera image, the direction in which the end effector 12 approaches the object 80 determined as the operation target. In other words, the main controller 60 determines, based on the camera image, an approach direction of the end effector 12 for approaching the object 80 determined as the operation target. Determining the approach direction of the end effector 12 determines a holding orientation of the end effector 12 for holding the object 80 after approaching the object 80. The main controller 60 controls the motion of the arm 11 to move the end effector 12 toward the object 80 in the determined approach direction. Steps s53, s1, and s61 are then performed to cause the end effector 12 to hold the object 80. The control system 50 thereafter operates in the same manner as or in a similar manner to the above.

Note that the external force estimation process may be repeatedly performed during a period from when the end effector 12 holds the object 80 to when the end effector 12 releases the object 80 after transferring the object 80. In this case, step s63 may be skipped. The holding controller 200 may also control the holding force of the end effector 12 holding the object 80 based on the acting external force estimated by the second estimator 220 during the period from when the end effector 12 holds the object 80 to when the end effector 12 releases the object 80. When the external force estimation process is repeatedly performed during the transfer of the object 80 with the end effector 12, the second orientation (in other words, the external force estimation orientation) of the end effector 12 in the external force estimation process may change in response to changes in the orientation of the end effector 12 during the transfer of the object 80. In other words, the external force estimation process may be repeatedly performed in response to changes in the orientation of the end effector 12.

In this example, as described above, the obtainer 250 obtains the external force acting on the end effector 12 based on the multiple first components of the gravitational force of the end effector 12 acting on the end effector 12 in the reference setting orientation (in other words, the first orientation), the multiple second components of the gravitational force of the end effector 12 acting on the end effector 12 in the external force acting orientation (in other words, the second orientation), and the force detection signal 21 output in response to the external force acting on the end effector 12. This allows the processing device 1 to appropriately obtain the external force acting on the end effector 12 (or the force externally acting on the end effector 12 other than the gravitational force). This improves the usability of the processing device 1.

In this example, each of the reference setting orientation and the external force estimation orientation of the end effector 12 is not limited to a specific orientation. The processing device 1 can thus obtain the external force acting on the end effector 12 without being restricted by the orientation of the end effector 12.

In this example, the external force acting on the end effector 12 can be obtained after the reference setting independently of the reference setting orientation of the end effector 12. The processing device 1 can thus repeatedly perform the reference setting without being restricted by the orientation of the end effector 12 to reduce the effect of temperature drift on the detection result obtained by the force sensor 20. When the end effector 12 is included in the robot 10, for example, the reference setting can be repeatedly performed without interrupting the operation of the robot 10 to reduce the effect of temperature drift on the detection result obtained by the force sensor 20. This improves the work efficiency of the robot 10.

In this example, the holding controller 200 controls the holding force of the end effector 12 holding the object 80 based on the acting external force estimated by the second estimator 220 while the object 80 is being held by the end effector 12. The object 80 is thus less likely to fall from the end effector 12.

In this example, the reference setting is performed before the holding controller 200 causes the end effector 12 to hold the object 80 in response to the holding instruction from the main controller 60 to the processing device 1. The end effector 12 is less likely to receive an external force before holding the object 80. The reference setting can thus be reliably performed with no external force acting on the end effector 12 before the object 80 is held.

In the above example, the reference setting is performed by the force sensor 20. However, the reference setting may be performed by the controller 2 in the processing device 1. In this case, in step s11 in the calibration process, the controller 2 performs the reference setting by setting, as the reference points, the detected acting force x-component, the detected acting force y-component, and the detected acting force z-component indicated by the latest force detection signal 21 output from the force sensor 20. More specifically, in step s11, the controller 2 performs the reference setting using the detected acting force x-component, the detected acting force y-component, and the detected acting force z-component indicated by the latest force detection signal 21 output from the force sensor 20 respectively as the x-component adjustment value, the y-component adjustment value, and the z-component adjustment value. The controller 2 subtracts the x-component adjustment value from the detected acting force x-component indicated by the force detection signal 21 output from the force sensor 20 and uses the resultant value as the detected acting force x-component indicated by the force detection signal 21 after the reference setting (or the detected acting force x-component after the reference setting). The controller 2 subtracts the y-component adjustment value from the detected acting force y-component indicated by the force detection signal 21 output from the force sensor 20 and uses the resultant value as the detected acting force y-component indicated by the force detection signal 21 after the reference setting (or the detected acting force y-component after the reference setting). The controller 2 subtracts the z-component adjustment value from the detected acting force z-component indicated by the force detection signal 21 output from the force sensor 20 and uses the resultant value as the detected acting force z-component indicated by the force detection signal 21 after the reference setting (or the detected acting force z-component after the reference setting).

The external force estimation process may be performed after the object 80 is lifted. For example, the external force estimation process may be performed at least once after the object 80 is lifted before being transferred to the worktable 91. In this case, the controller 2 may provide an error notification to the main controller 60 through the interface 6 when the magnitude of the acting external force estimated by the second estimator 220 reaches or exceeds a threshold in response to, for example, a collision of the end effector 12 with an obstacle. The main controller 60 receiving the error notification may stop the motion of the arm 11 to stop the robot 10.

The external force estimation process may be performed with no object 80 held by the end effector 12. For example, the external force estimation process may be performed at least once while the end effector 12 is moving to the initial position to hold a next object 80 after placing an object 80 on the worktable 91. In this case, the controller 2 may provide an error notification to the main controller 60 through the interface 6 when the magnitude of the acting external force estimated by the second estimator 220 reaches or exceeds a threshold in response to, for example, a collision of the end effector 12 with an obstacle.

The second estimator 220 may estimate the acting external force acting on the end effector 12 in each of multiple different orientations. For example, the orientation of the end effector 12 may change while the robot 10 is transferring the object 80 held by the end effector 12 to the worktable 91. In this case, the second estimator 220 may estimate the acting external force acting on the end effector 12 in each of multiple orientations during the transfer of the object 80. More specifically, the second estimator 220 may estimate the acting external force acting on the end effector 12 in each of multiple second orientations during the transfer of the object 80.

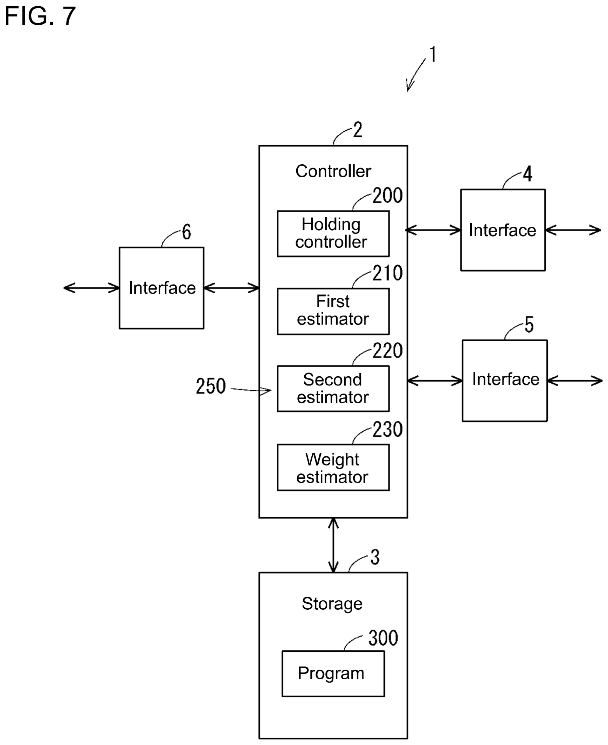

The obtainer 250 in the controller 2 may obtain the weight of the object 80 based on the acting external force estimated by the second estimator 220. FIG. 7 is a block diagram of the processing device 1 in this case in an example. In the example in FIG. 7, the obtainer 250 includes a weight estimator 230 that performs a weight estimation process for estimating the weight of the object 80 based on the acting external force estimated by the second estimator 220. The weight estimation process is, in other words, a weight obtaining process for obtaining the weight of the object 80. The weight estimator 230 is a functional block implemented by the CPU in the controller 2 executing the program 300 in the storage 3. Note that the functions of the weight estimator 230 may be implemented entirely or partially by a hardware circuit, without using software to implement the functions.

For example, the weight estimator 230 may perform the weight estimation process after the robot 10 lifts the object 80 held by the end effector 12. In this case, an external-force weight estimation process including the external force estimation process and the weight estimation process is performed after the object 80 is lifted. In the external-force weight estimation process, the weight estimator 230 divides the magnitude of the acting external force estimated in the external-force weight estimation process by the magnitude of the gravitational acceleration, and determines the resultant value to be an estimated value of the weight of the object 80, thus estimating the weight of the object 80.

When the weight estimated in the external-force weight estimation process is far less than a first threshold, the controller 2 may provide an error notification to the main controller 60 through the interface 6. When the weight estimated in the external-force weight estimation process is far greater than a second threshold that is greater than the first threshold, the controller 2 may provide an error notification to the main controller 60 through the interface 6.

The weight estimator 230 may perform the weight estimation process multiple times. In this case, for example, the external-force weight estimation process including the external force estimation process and the weight estimation process may be performed multiple times after the object 80 is lifted.

The controller 2 may estimate, based on the force detection signal 21, the weight of the object 80 held by the end effector 12 in each of multiple different holding orientations. In this case, the controller 2 functions as an estimator that estimates, based on the force detection signal 21, the weight of the object 80 held by the end effector 12 in each of multiple holding orientations. This example will be described below.

For example, the end effector 12 may hold multiple randomly placed objects 80 one by one, and the multiple objects 80 may include a first object 80 (also referred to as a first object 80a), a second object 80 (also referred to as a second object 80b), and a third object 80 (also referred to as a third object 80c). The end effector 12 may approach the first, second, and third objects 80a, 80b, and 80c in different approach directions. In this case, the end effector 12 approaching the first object 80a to hold the first object 80a is in a first holding orientation. The end effector 12 approaching the second object 80b to hold the second object 80b is in a second holding orientation. The end effector 12 approaching the third object 80c to hold the third object 80c is in a third holding orientation. The first, second, and third holding orientations are different from one another.

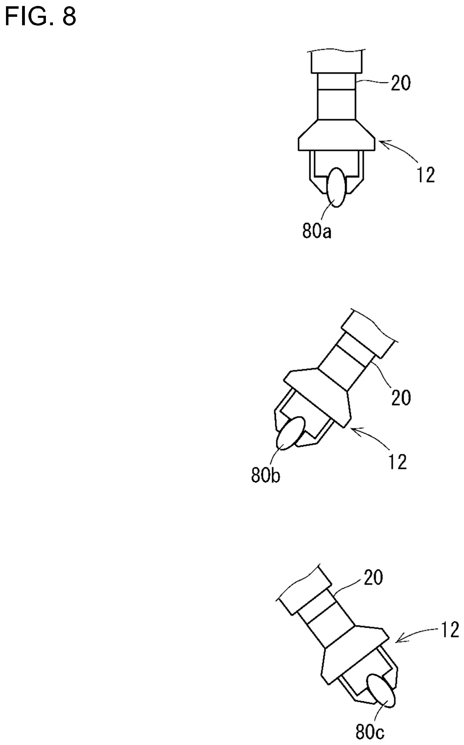

FIG. 8 is a schematic diagram of the end effector 12 in the first holding orientation, the end effector 12 in the second holding orientation, and the end effector 12 in the third holding orientation in an example. FIG. 8 illustrates the end effector 12 in the first holding orientation in an example at the top, the end effector 12 in the second holding orientation in an example in the middle, and the end effector 12 in the third holding orientation in an example at the bottom.

In this example, the external-force weight estimation process is performed after the first object 80a held by the end effector 12 in the first holding orientation is lifted. In this external-force weight estimation process, the second estimator estimates the acting external force on the end effector 12 in the first holding orientation, and the weight estimator 230 estimates the weight of the first object 80a based on the acting external force estimated by the second estimator 220.

The external-force weight estimation process is performed after the second object 80b held by the end effector 12 in the second holding orientation is lifted. In this external-force weight estimation process, the second estimator 220 estimates the acting external force on the end effector 12 in the second holding orientation, and the weight estimator 230 estimates the weight of the second object 80b based on the acting external force estimated by the second estimator 220.

The external-force weight estimation process is performed after the third object 80c held by the end effector 12 in the third holding orientation is lifted. In this external-force weight estimation process, the second estimator 220 estimates the acting external force on the end effector 12 in the third holding orientation, and the weight estimator 230 estimates the weight of the third object 80c based on the acting external force estimated by the second estimator 220.

Note that the controller 2 may estimate the weight of the object 80 held by the end effector 12 in each of multiple different holding orientations when the orientation of the end effector 12 changes during the transfer of the object 80 to the worktable 91.

In this example, the controller 2 can thus estimate the weight of the object 80 held by the end effector 12 independently of the holding orientation of the end effector 12. This improves the usability of the processing device 1.

In the above example, the calibration process and the external force estimation process are performed by the processing device 1 functioning as a controller that controls the end effector 12. However, the calibration process and the external force estimation process may be performed by the main controller 60. More specifically, the main controller 60 may include a control unit that functions as the first estimator 210 and the second estimator 220 in the processing device 1. In this case, the main controller 60 communicates with the force sensor 20 and receives the force detection signal 21 from the force sensor 20. The main controller 60 then provides information about the acting external force estimated in the external force estimation process to the processing device 1. In the processing device 1, the holding controller 200 in the controller 2 controls the holding force of the end effector 12 holding the object 80 based on the acting external force estimated by the main controller 60. The main controller 60 may perform the calibration process, the external force estimation process, and the weight estimation process. More specifically, the control unit in the main controller 60 may function as the first estimator 210, the second estimator 220, and the weight estimator 230 in the processing device 1.

Note that the holding controller 200 can obtain the estimation result of the acting external force more promptly when the acting external force acting on the end effector 12 is estimated by the processing device 1 that controls the end effector 12 as in the example in FIG. 3 than when the acting external force is estimated by the main controller 60. In the example in FIG. 3, the holding controller 200 can control the holding force, for example, in real time based on the estimated acting external force.

The processing device and the system including the processing device have been described in detail, but the above structures are illustrative in all respects, and the present disclosure is not limited to the above structures. The above embodiments may be combined in any manner unless any contradiction arises. Many examples other than those illustrated above may also be implemented without departing from the scope of the present disclosure.

For example, the processing device 1 may be a cloud server 1. In this case, the cloud server 1 may transmit information about the detected (in other words, estimated) acting external force (also referred to as acting external force information) to a device other than the cloud server 1. This device may control the holding force of the end effector 12 based on the received acting external force information. The main controller 60 may be a cloud server.

The target held by the end effector 12 may be an organism such as a human or an animal, unlike an object in the above example. The robot 10 is not limited to a robotic arm in the above example. For example, the robot 10 may be a nursing robot or a teleoperated robot. The robot 10 may be a humanoid robot.

The present disclosure provides the structures described below.

In one embodiment, (1) a processing device includes a controller that detects, based on a force detection signal output from a sensor device, an external force acting on an end effector. The controller includes an obtainer that obtains the external force acting on the end effector based on a plurality of first components of a gravitational force of the end effector acting on the end effector in a first orientation being an orientation of the end effector at reference setting for the sensor device, a plurality of second components of the gravitational force of the end effector acting on the end effector in a second orientation being an orientation of the end effector receiving the external force, and the force detection signal output in response to the external force acting on the end effector.

(2) In the processing device according to (1), the obtainer obtains the external force acting on the end effector in each of a plurality of the second orientations different from each other.

(3) In the processing device according to (1) or (2), the obtainer calculates a magnitude of the external force.

(4) In the processing device according to any one of (1) to (3), the end effector is a holder configured to hold a target.

(5) In the processing device according to (4), the obtainer obtains a weight of the target based on the external force obtained while the holder is holding the target.

(6) In the processing device according to (5), the obtainer obtains the weight of the target held by the holder in each of a plurality of holding orientations different from each other.

(7) The processing device according to any one of (4) to (6) further includes a holding controller that controls holding of the target performed by the holder.

(8) In the processing device according to (7), in response to an instruction provided to the processing device to cause the holder to hold the target, the reference setting is performed before the holding controller causes the holder to hold the target.

(9) In the processing device according to (7) or (8), the holding controller controls, based on the external force obtained by the obtainer, a holding force of the holder holding the target.

(10) In the processing device according to (9), during a period from when the target is held by the holder to when the target is lifted, the obtainer obtains the external force acting on the holder a plurality of times, and the holding controller controls the holding force based on the external force obtained by the obtainer.

(11) A robotic system includes the processing device according to any one of (1) to (10) and a robot including the end effector controllable based on the external force obtained by the processing device.

(12) An end effector is controllable based on the external force obtained by the processing device according to any one of (1) to (10).

(13) A processing device includes an estimator that estimates, based on a force detection signal output from a force sensor detecting a force acting on a holder, a weight of an object held by the holder in each of a plurality of holding orientations different from each other.

(14) A program causes a computer to function as the processing device according to any one of (1) to (10) and (13).

REFERENCE SIGNS

| 1 | processing device |
| 12 | end effector |
| 20 | sensor device |
| 21 | force detection signal |
| 60 | main controller |
| 80 | object |
| 100 | robotic system |
| 250 | obtainer |

**Claims**

1. A processing device, comprising:

   a controller configured to detect, based on a force detection signal output from a sensor device, an external force acting on an end effector,
   the controller including an obtainer configured to obtain the external force acting on the end effector based on

   a plurality of first components of a gravitational force of the end effector acting on the end effector in a first orientation, the first orientation being an orientation of the end effector at reference setting for the sensor device,
   a plurality of second components of the gravitational force of the end effector acting on the end effector in a second orientation, the second orientation being an orientation of the end effector receiving the external force, and
   the force detection signal output in response to the external force acting on the end effector.

2. The processing device according to claim 1, wherein
   the obtainer is configured to obtain the external force acting on the end effector in each of a plurality of the second orientations different from each other.

3. The processing device according to claim 1 or claim 2, wherein
   the obtainer is configured to calculate a magnitude of the external force.

4. The processing device according to any one of claims 1 to 3, wherein
   the end effector is a holder configured to hold a target.

**EP 4 737 073 A1**

5. The processing device according to claim 4, wherein
the obtainer is configured to obtain a weight of the target based on the external force obtained while the holder is holding the target.

6. The processing device according to claim 5, wherein
the obtainer is configured to obtain the weight of the target held by the holder in each of a plurality of holding orientations different from each other.

7. The processing device according to any one of claims 4 to 6, further comprising:
a holding controller configured to control holding of the target performed by the holder.

8. The processing device according to claim 7, wherein
in response to an instruction provided to the processing device to cause the holder to hold the target, the reference setting is performed before the holding controller causes the holder to hold the target.

9. The processing device according to claim 7 or claim 8, wherein
the holding controller is configured to control, based on the external force obtained by the obtainer, a holding force of the holder holding the target.

10. The processing device according to claim 9, wherein
during a period from when the target is held by the holder to when the target is lifted,

the obtainer is configured to obtain the external force acting on the holder a plurality of times, and
the holding controller is configured to control the holding force based on the external force obtained by the obtainer.

11. A robotic system, comprising:

the processing device according to any one of claims 1 to 10; and
a robot including the end effector controllable based on the external force obtained by the processing device.

12. An end effector controllable based on the external force obtained by the processing device according to any one of claims 1 to 10.

13. A program for causing a computer to function as the processing device according to any one of claims 1 to 10.

**15**

FIG. 1

FIG. 2

FIG. 3

FIG. 4

s1

Calibration process s11

Provide instruction to perform
reference setting

s12

Estimate first detection result
of acting gravitational force

s2

External force
estimation process s21

Obtain force detection signal after
reference setting and estimate second
detection result of acting gravitational force

s22

Estimate acting external force

# FIG. 5

Main controller | Processing device

s51
Move end effector to initial position

s52
Move end effector toward object

s53
Holding instruction →

s1
Calibration process (Reference setting)

s61
Hold object

s62
← Holding completion notification

s54
Start transfer of object

s2
External force estimation process

s63
Lifting complete? No

Yes

s55
Complete transfer of object

s56
Release instruction →

s64
Release object

## FIG. 6

Magnitude of acting external force

Time

Holding force

Time

Holding complete

Lifting complete

Lifting started

FIG. 7

FIG. 8

**INTERNATIONAL SEARCH REPORT**

| International application No. |
|---|
| **PCT/JP2024/023349** |

| A. | CLASSIFICATION OF SUBJECT MATTER |
|---|---|

*B25J 13/08*(2006.01)i
FI:   B25J13/08 Z

According to International Patent Classification (IPC) or to both national classification and IPC

| B. | FIELDS SEARCHED |
|---|---|

Minimum documentation searched (classification system followed by classification symbols)

B25J13/08

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 6-262563 A (FANUC CORPORATION) 20 September 1994 (1994-09-20) fig. 1-4 | 1-4, 7-8, 11-13 |
| Y | | 5-6, 9-10 |
| Y | JP 2020-011340 A (OMRON CORPORATION) 23 January 2020 (2020-01-23) claims, paragraph [0054] | 5-6, 9-10 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **24 July 2024** | **06 August 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**INTERNATIONAL SEARCH REPORT**
Information on patent family members

International application No.

**PCT/JP2024/023349**

| Patent document cited in search report | | | Publication date (day/month/year) | Patent family member(s) | | | Publication date (day/month/year) |
|---|---|---|---|---|---|---|---|
| JP | 6-262563 | A | 20 September 1994 | (Family: none) | | | |
| JP | 2020-011340 | A | 23 January 2020 | US | 2021/0248291 | A1 | |
| | | | | claims, paragraph [0064] | | | |
| | | | | WO | 2020/017266 | A1 | |
| | | | | EP | 003825073 | A1 | |
| | | | | CN | 112236271 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7205075 A